(19) Europäisches Patentamt
European Patent Office
Office européen des brevets

(11) **EP 2 998 378 A1**

(12) **DEMANDE DE BREVET EUROPEEN**

(43) Date de publication:
**23.03.2016 Bulletin 2016/12**

(51) Int Cl.:
***C09K 5/04*** *(2006.01)*  ***C23C 18/12*** *(2006.01)*

(21) Numéro de dépôt: **15185195.3**

(22) Date de dépôt: **15.09.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA**

(30) Priorité: **18.09.2014 EP 14290282**
**20.11.2014 FR 1461274**

(71) Demandeur: **MOF Application Services**
**92300 Levallois-Perret (FR)**

(72) Inventeurs:
• **Aguado, Sonia Sierre**
**28803 Alcala de Henares (ES)**
• **Wiskemann, Bernd**
**1273 Arzier (CH)**

(74) Mandataire: **Novagraaf Technologies**
**Bâtiment O2**
**2, rue Sarah Bernhardt**
**CS90017**
**92665 Asnières-sur-Seine Cedex (FR)**

(54) **PROCÉDÉ DE REVÊTEMENT D'UN SUPPORT MÉTALLIQUE AVEC UN ADSORBANT MOF**

(57) La présente invention se rapporte à un procédé de revêtement d'un support métallique avec un adsorbant MOF, sans utilisation de liant, adhésif ou composite permettant l'adhérence de la couche d'adsorbant sur le support métallique.

L'invention se rapporte également à l'utilisation dudit procédé pour la fabrication d'échangeurs de chaleur pour systèmes de climatisation.

100 μm

**FIGURE 2**

EP 2 998 378 A1

## Description

### Domaine de l'invention

La présente invention se rapporte à un procédé de revêtement d'un support métallique avec un adsorbant MOF, sans utilisation de liant, adhésif ou composite permettant l'adhérence de la couche d'adsorbant sur le support métallique.

L'invention se rapporte également à l'utilisation dudit procédé pour la fabrication d'échangeurs de chaleur pour systèmes de climatisation.

### Etat de la technique

On connait les principes de fonctionnement des machines à froid utilisant des adsorbats solides dans un système tritherme (fermé). Par exemple, les sociétés Vaillant, Viesman, Sortech, Mycon commercialisent de tels type machines à froid.

Si l'on considère un système tritherme à adsorption, avec $T_0$ la température interne d'évaporation à laquelle le froid $Q_0$ est produit, $T_c$ la température intermédiaire de rejet thermique de $Q_c$ (condensation et adsorption) et, enfin $T_A$ la température interne de la source chaude qui fournit $Q_g$ pour la régénération de l'adsorbant.

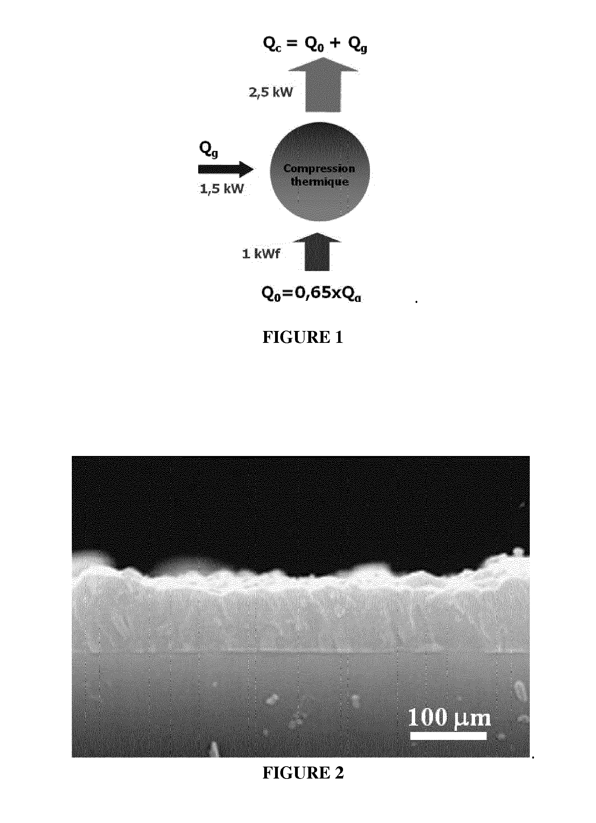

L'efficacité du procédé est déterminée par la quantité de vapeur du fluide réfrigérant qui peut être réversiblement échangée entre adsorption et désorption (coefficient de performance ; « COP » ou «coefficient of performance » en anglais) et par le temps d'adsorption (puissance de refroidissement spécifique : « SCP » ou « specific cooling power » en anglais). Cf. Figure 1.

Ainsi, l'efficacité du procédé de transformation thermique est exprimée :

(i) Par le coefficient de performance (COP)

$$\mathrm{COP} = \mathrm{Q_0/Q_g} = \mathrm{Q_{Evaporation}/Q_{D\acute{e}sorption}}$$

Le COP est directement lié à la variation de masse de fluide cyclée (adsorbée-désorbée) dans le cycle tritherme. En général, les fluides qui offrent les meilleurs potentiels sont ceux qui ont de grandes chaleurs latentes/ chaleurs de vaporisation comme les alcools courts (méthanol, éthanol) et en particulier l'eau.

(ii) Par la puissance de la machine qui est exprimée en terme de puissance de refroidissement spécifique (SCP) par volume (V) ou poids (m) du dispositif (dispositif = adsorbant + adsorbeur)

$$\mathrm{SCP} = 1/\mathrm{V} \; \mathrm{x} \; \mathrm{Q_0/t}$$

ou

$$\mathrm{SCP} = \frac{1}{V/m} \frac{Q_{\mathrm{Evaporation}}}{t}$$

Le SCP est directement lié à la vitesse des phénomènes de transferts, c.à.d. le transfert de matière (temps nécessaire pour que le phénomène se réalise, dont la vitesse de transport du fluide dans l'adsorbant est un élément) et le transfert thermique (temps nécessaire au transfert des quantités de chaleur d'un élément à un autre, dont la vitesse de conduction/convection de la chaleur est un élément).

La performance (SCP) d'une machine à froid peut-être limitée soit par:

- 1) la faible quantité de fluide réfrigérant cyclée dans un cycle (p. ex: sur gel de silice (« silica gel » en anglais) comme adsorbant) = le COP

- 2) la faible vitesse d'adsorption/désorption du fluide réfrigérant dans l'adsorbant (ex: gel de silice (« silica gel » en anglais)) - transport de matière

- 3) la faible vitesse de transfert thermique = conduction de chaleur de l'adsorbant et l'adsorbeur et de son interface.

Pour minimiser les charges thermiques ou la taille des dispositifs pour machine à froid, des adsorbants à capacité d'adsorption élevée dans les conditions d'opération, ainsi que des cinétiques d'adsorption et de désorption rapides, sont nécessaires. Un système permettant un transfert de chaleur optimisé serait également nécessaire pour parfaire la performance (SCP). Ainsi, l'adsorbant et la configuration de l'adsorbeur ont un impact important sur la performance.

Les matériaux MOF (matériau métallo-organique, ou « métal organic framework » en anglais) sont de bons adsorbants en ce qu'ils permettent de lever les facteurs limitants 1) et 2). Toutefois, l'optimisation du facteur 3) reste élusive.

Des études ont montré qu'un contact direct et sans liant entre une zéolite et la surface d'un métal permet une meilleure diffusibilité thermale. Par exemple, Bauer et coll. ont démontré par des mesures de capacité et cinétique de sorption thermique sur des échantillons métalliques plats, et sur des échangeurs thermiques revêtus de zéolite, que ceci résulte en une meilleure performance d'adsorption combinée à une bonne mécanique (cf. J. Bauer , Int. J. Energy Res. 2009; 33:1233-1249 [1]).

Ainsi, une option pour tenter d'optimiser la faible vitesse de transfert thermique d'un adsorbant MOF dans un système de machine à froid serait d'intégrer celui-ci dans un échangeur de chaleur revêtu d'une couche de MOF dans lequel le matériau MOF est en contact direct avec le support de l'échangeur de chaleur.

Il existe donc un besoin de développer un procédé permettant de revêtir la surface d'un support métallique avec un MOF, dans lequel la croissance de la couche de MOF a lieu directement sur le support métallique (i.e., sans liant, adhésif ou composite).

## Description de l'invention

La présente invention répond précisément à ce besoin en fournissant un procédé de croissance de MOF sur la surface d'un support métallique, comprenant :

(i) oxyder le métal de la surface du support métallique pour la recouvrir d'une couche d'oxyde métallique;

(ii) préparer une solution/suspension précurseur de matériau MOF comprenant le mélange dans un solvant polaire (a) d'un précurseur inorganique métallique se présentant sous la forme de métal M, d'un sel de métal M ou d'un complexe de coordination comprenant l'ion métallique M dans lequel M est un ion métallique choisi parmi $Al^{3+}$, $Fe^{2+}$, $Fe^{3+}$, $Zn^{2+}$, $Ti^{3+}$, $Ti^{4+}$, $Zr^{2+}$, $Zr^{4+}$, $Ca^{2+}$, $Cu^{2+}$, $Gd^{3+}$, $Mg^{2+}$, $Mn^{2+}$, $Mn^{3+}$, $Mn^{4+}$ ou $Si^{4+}$; de préférence $Zr^{4+}$ ou $Al^{3+}$; et (b) d'au moins un ligand L choisi parmi un ligand di-, tri- ou tétra- carboxylate choisi parmi : $C_2H_2(CO_2^-)_2$ (fumarate), $C_2H_4(CO_2^-)_2$ (succinate), $C_3H_6(CO_2^-)_2$ (glutarate), $C_4H_4(CO_2^-)_2$ (muconate), $C_4H_8(CO_2^-)_2$ (adipate), $C_7H_{14}(CO_2^-)_2$ (azelate), $C_5H_3S(CO_2^-)_2$ (2,5-thiophènedicarboxylate), $C_6H_4(CO_2^-)_2$ (téréphtalate), $C_6H_4(CO_2^-)_2$ (iso-téréphtalate), $C_6H_2N_2(CO_2^-)_2$ (2,5-pyrazine dicarboxylate), $C_{10}H_6(CO_2^-)_2$ (naphtalène-2,6-dicarboxylate), $C_{12}H_8(CO_2^-)_2$ (biphényle-4,4'-dicarboxylate), $C_{12}H_8N_2(CO_2^-)_2$ (azobenzènedicarboxylate), $C_6H_3(CO_2^-)_3$ (benzène-1,2,4-tricarboxylate), $C_6H_3(CO_2^-)_3$ (benzène-1,3,5-tricarboxylate), $C_{24}H_{15}(CO_2^-)_3$ (benzène-1,3,5-tribenzoate), $C_6H_2(CO_2^-)_4$ (benzène-1,2,4,5-tétracarboxylate, $C_{10}H_4(CO_2^-)_4$ (naphtalène-2,3,6,7-tétracarboxylate), $C_{10}H_4(CO_2^-)_4$ (naphtalène-1,4,5,8-tétracarboxylate), $C_{12}H_6(CO_2^-)_4$ (biphényl-3,5,3',5'-tétracarboxylate), le 2-aminotéréphtalate, le 2-nitrotéréphtalate, le 2-méthyltéréphtalate, le 2-chlorotéréphtalate, le 2-bromotéréphtalate, le 2,5-dihydroxotéréphtalate, le tétrafluorotéréphtalate, le tétraméthyltéréphtalate, le diméthyl-4,4'-biphénydicarboxylate, le tétraméthyl-4,4'-biphénydicarboxylate, le dicarboxy-4,4'-biphénydicarboxylate, ou le 2,5-pyrazyne dicarboxylate ;

(iii) immerger le support métallique oxydé obtenu à l'étape (i) dans la solution/suspension obtenue à l'étape (ii);

(iv) chauffer le mélange de l'étape (iii) à 100-140°C, de préférence 110-130°C, avantageusement à 120°C pendant 24 à 36 heures, de préférence 48 à 36 heures, avantageusement au moins 48 heures ;

(v) Retirer le support métallique de la solution/suspension précurseur de matériau MOF,

(vi) Rincer le support avec un solvant approprié

(vii) Sécher à l'air à 40-60°C, de préférence 45-55°C, avantageusement à 50°C.

Dans l'étape (ii), le ligand L peut également représenter le 2,5 diperfluorotéréphthalate, azobenzène 4,4'-dicarboxylate, 3,3'-dichloro azobenzène 4,4'-dicarboxylate, 3,3'-dihydroxo azobenzène 4,4'-dicarboxylate, 3,3'-diperfluoro azobenzène 4,4'-dicarboxylate, 3,5,3',5'-azobenzène tétracarboxylate, 2,5-diméthyl téréphthalate, perfluorosuccinate, perfluoromuconate, perfluoro glutarate, 3,5,3',5' perfluoro-4,4'-azobenzène dicarboxylate, 3,3'-diperfluoro azobenzène 4,4'-dicarboxylate.

Avantageusement, le ligand L peut représenter $C_2H_2(CO_2^-)_2$ (fumarate), $C_6H_4(CO_2^-)_2$ (téréphtalate), $C_6H_4(CO_2^-)_2$ (isotéréphtalate), le 2-aminotéréphtalate, le MTB (méthanetétrabenzoate), ou le 1,4-benzènedicarboxylate.

Avantageusement, le support métallique peut être en cuivre ou aluminium, et peut se présenter sous forme de plaque, de structure en nid d'abeille (« honeycomb shape » en anglais), ou toute forme utilisée dans les échangeurs de chaleur, par exemple un tube plat à ailettes.

Avantageusement, l'étape (i) peut être réalisée par tout moyen connu de l'homme du métier, par exemple par un traitement thermique ou chimique de la surface de l'adsorbeur, et qui est spécifique et adapté au matériau de l'adsorbeur et de l'adsorbant. Par exemple, lorsque le support métallique est en cuivre, l'étape (i) peut être réalisée en plaçant le support en cuivre dans un four à une température et pendant un lapse de temps suffisants pour réaliser l'oxydation de la surface du support en cuivre. Par exemple, le traitement au four peut être réalisé à 100°C sous atmosphère ambiante. Dans un autre exemple, lorsque le support métallique est en aluminium, l'étape (i) peut être réalisée en traitant le support dans une solution d'hydroxyde de sodium, dans une solution diluée d'acide nitrique (pour désoxyder la surface d'aluminium), puis séchage à l'air à une température et pendant un lapse de temps suffisants pour réaliser l'oxydation de la surface du support en aluminium. Par exemple, le séchage à l'air peut être réalisé à 60°C.

La préparation de la solution/suspension précurseur de matériaux MOF peut être de préférence réalisée en présence d'énergie qui peut être apportée par exemple par le chauffage, comme par exemple des conditions hydrothermales ou solvothermales, mais également par micro-ondes, par ultrasons, par broyage, par un procédé faisant intervenir un fluide supercritique, etc. Les protocoles correspondants sont ceux connus de l'homme du métier. Des exemples non limitatifs de protocoles utilisables pour les conditions hydrothermales ou solvothermales sont décrits par exemple dans K. Byrapsa, et al. « Handbook of hydrothermal technology », Noyes Publications, Parkridge, New Jersey USA, William Andrew Publishing, LLC, Norwich NY USA, 2001 **[14].** Pour la synthèse par voie micro-ondes, des exemples non limitatif de protocoles utilisables sont décrits par exemple dans G. Tompsett, et al. ChemPhysChem. 2006, 7, 296 **[15] ;** dans S.-E. Park, et al. Catal. Survey Asia 2004, 8, 91 **[16] ;** dans C. S. Cundy, Collect. Czech. Chem. Commum. 1998, 63, 1699 [17] ; ou dans S. H. Jhung, et al. Bull. Kor. Chem. Soc. 2005, 26, 880 **[18].**

Les conditions hydrothermales ou solvothermales, dont les températures de réactions peuvent varier entre 0 et 220°C, sont généralement effectuées dans des récipients en verre (ou en plastique) lorsque la température est inférieure à la température d'ébullition du solvant. Lorsque la température est supérieure ou lorsque la réaction s'effectue en présence de fluor, des corps en téflon insérés dans des bombes métalliques sont employés **[14].**

Ainsi, avantageusement, l'étape (iv) peut être réalisée dans un corps en téflon inséré dans une bombe métallique (« teflonlined stainless steel autoclave » en anglais).

Les solvants utilisés dans l'étape (ii) sont généralement polaires. Notamment les solvants suivants peuvent être utilisés : l'eau, les alcools, le diméthylformamide, le diméthylsulfoxide, l'acétonitrile, le tétrahydrofurane, le diéthylformamide, le chloroforme, le dichlorométhane, le diméthylacétamide ou des mélanges de ces solvants. Avantageusement, il peut s'agir du diméthylformamide (DMF). Les solvants ci-dessus peuvent également être utilisés dans l'étape de rinçage (vi).

Un ou plusieurs additifs peuvent également être ajoutés au cours de la préparation de la solution/suspension précurseur de matériau MOF, dans l'étape (ii), afin de moduler le pH du mélange. Ces additifs peuvent avantageusement être choisis parmi les acides minéraux ou organiques ou les bases minérales ou organiques. En particulier, l'additif peut être choisi parmi HF, HCl, $HNO_3$, $H_2SO_4$, NaOH, KOH, la lutidine, l'éthylamine, la méthylamine, l'ammoniac, l'urée, l'EDTA, la tripropylamine, pyridine, etc. Avantageusement, HCl peut être utilisé.

Le procédé selon l'invention a l'avantage de permettre l'obtention de supports métalliques revêtus d'une couche fine de matériau MOF, sans utilisation de liants, adhésifs ou composite pour assurer l'adhérence du MOF à la surface du support. Le matériau MOF adhère à la couche d'oxyde métallique générée sur la surface du support métallique pendant l'étape (i) du procédé. Dans des applications d'échangeurs de chaleur, où le matériau MOF fonctionne comme adsorbant (e.g., machines à froid), cette mise en forme de MOF en couche directement sur le support métallique permet d'optimiser la vitesse de transfert thermique, et de réduire la masse de couche d'adsorbant (puisque aucun liant, adhésif ou composite n'est nécessaire).

Or on sait que, dans le cas des échangeurs de chaleur à surface revêtue d'adsorbant, bien entendu, la surface d'échange est importante, mais généralement la surface est imposée moins pour assurer la puissance thermique que pour assurer la quantité d'adsorbant nécessaire car l'épaisseur des couches d'adsorbant est limitée. Autrement dit, une réduction de la masse d'adsorbant par un facteur 2 peut se traduire par une réduction des surfaces d'échange d'un facteur proche de 2 et le volume de chaque adsorbeur serait également fortement réduit.

Le procédé selon l'invention a justement l'avantage de permettre de déposer un adsorbant MOF pour former une surface revêtue efficace avec une épaisseur appropriée d'adsorbant.

Un autre avantage du procédé selon l'invention est de permettre une optimisation de la masse d'eau cyclée au cours d'un cycle, lorsque qu'un échangeur de chaleur revêtu de MOF selon le procédé de l'invention est utilisé. En effet, typiquement, dans la chaleur de régénération, la chaleur sensible peut représenter le tiers et la chaleur latente les deux tiers. A titre d'exemple, une réduction d'un facteur 2 des masses d'adsorbant et de métal, entraînerait une réduction d'un facteur deux de la chaleur sensible si les conditions de température sont les mêmes. Le gain du COP serait alors entre 15 et 20% ce qui est très appréciable.

En résumé, le procédé selon l'invention permet l'accès à des échangeurs de chaleur avec des performances avantageuses en termes de masse cyclée, COP et SCP.

Ainsi, l'invention concerne également l'utilisation du procédé selon l'invention, pour la fabrication d'échangeurs de chaleurs, notamment pour des systèmes de climatisation.

D'autres avantages pourront encore apparaître à l'homme du métier à la lecture des exemples ci-dessous, en référence aux figures annexées, donnés à titre illustratif, et non limitatif.

Des exemples de matériaux MOF susceptibles d'être déposés sur support métallique selon le procédé de l'invention sont mentionnés ci-dessous. Ceux-ci sont connus, et leur synthèse et caractérisation ont été rapportées dans la littérature:

1) Zr-UiO-66 : Cavka et al., J. Am. Chem. Soc., 2008, 130, 13850 **[7]**

2) Zr-UiO-66-NH2 : Kandiah et al J. Mater. Chem., 2010,20, 9848-9851 **[9]**

3) Zr-fumarate (MOF-801) : réf **[6]** et Wibmann et al., Microporous mesoporous mater., 2012, 152, 64 **[8]**

4) MOF-841 : réf **[6]**

5) Al-CAU-10 : Reinsch et al, Chem. Mater. 2013, 25, 17-26 **[10]**

6) Al-fumarate (Basolite A520) : EP2230288 **[2]**

7) Al-MIL 100 : Volkringer,†Chem. Mater. 2009, 21, 5695-5697 **[11]**

**Brève description des figures**

- La figure 1 schématise le principe de fonctionnement des machines à froid utilisant des adsorbats solides dans un système tritherme (fermé).
- La figure 2 représente une image de la section d'une feuille de cuivre de revêtue de MOF Zr-UiO-66 selon l'exemple 2a, au microscope électronique.
- La figure 3 représente une image de la section d'une feuille d'aluminium revêtue de MOF Zr-fumarate selon l'exemple 2c, au microscope électronique.
- La figure 4 représente un exemple de configuration d'un système fermé tritherme de refroidissement/chauffage à adsorption pour machine à froid, avec deux modules adsorption/désorption fonctionnant en opposition de phase.
- Le tableau 1 répertorie une comparaison des quantités d'eau adsorbées (en % de la masse d'adsorbant anhydre) de différents adsorbants par rapport au gel de silice Fuji.
- Le tableau 2 répertorie les résultats comparatifs de l'exemple 1.

**EXEMPLES**

Certains solides MOF qui sont des polymères de coordinations poreux montrent des capacités d'adsorption-désorption intéressantes pour certaines conditions d'adsorptions et de désorptions, notamment à faible pression de vapeur d'eau. Ces performances proviennent du profil d'isotherme particulier dit en « S » (type V par la nomenclature IUPAC). Des isothermes d'adsorption de MOFs avantageusement utilisés dans le cadre de la présente invention ont été rapportés dans la littérature :

- Isothermes d'adsorption d'eau du MOF Zr-UiO-66: **[3]**
- Isotherme d'adsorption d'eau du MOF Zr-UiO-66-NH2 : **[4]**
- Isotherme d'adsorption d'eau du MOF Zr-UiO-66-NH2 : **[5]**
- Isothermes d'adsorption d'eau du MOF Zr-UiO-fumarate (MOF-801) : **[6].**
- Isotherme d'adsorption d'eau du MOF Zr-UiO-MTB (MOF-841) : **[6]**
- Isotherme d'adsorption d'eau du MOF Al-CAU-10 : **[6].**
- Isotherme d'adsorption d'eau du MOF Basolite A520 **[2]**

En résumé, les MOF mentionnés sont caractérisés par

- De grandes capacité d'adsorption d'eau à faible pression relatives de vapeurs d'eau (H.R <40%)

- Un profil d'adsorption en « S » plus ou moins marqué qui leurs confèrent une forte capacité en cyclage dans une fenêtre étroite de pression.

**Exemple 1 - Performances comparatives**

La performance de plusieurs adsorbants a été comparée dans différents modes de fonctionnement. Ces résultats comparatifs sont répertoriés dans le Tableau 1.

Tableau 1 :

| P/P$_{sat}$ | Silice de Fuji | CAU-10 | Al-fumarate | Cr-MiL-101-NH2 | Ti MIL | UiO-66HT | UiO-66NH$_2$ | SAPO-34 | MCM 41 | MOF S01 | MOF 841 |
|---|---|---|---|---|---|---|---|---|---|---|---|
| 0,1 | 6.6 | ++ | = | = | - | - | = | +++ | - | +++ | - |
| 0,15 | 9 | +++ | - | = | - | - | - | +++ | - | +++ | - |
| 0,2 | 12 | ++ | - | - | - | - | = | ++ | - | ++ | - |
| 0,25 | 14 | ++ | = | - | + | - | ++ | ++ | - | ++ | +++ |

Dans cette étude, 4 modes de fonctionnement $P/P_{sat}$ ont été considérés où $P/P_{sat}$ (ou l'humidité relative, H.R. ou R.H. en anglais) est le rapport entre la pression dans l'évaporateur (ou le condenseur) et $P_{sat}$ est la pression de vapeur saturante correspondant à la température d'adsorption -que l'on supposera égale à la température de condensation- (ou de désorption). La température du rejet thermique dépend du type de refroidissement : à eau (auquel cas 25°C est éventuellement possible) ou à air et dans ce dernier cas, la température dépend de la qualité du refroidissement (tour de refroissement ou simple aéro réfrigérant).

Dans le tableau 1 est présentée une comparaison, pour les 5 conditions $P/P_{sat}$ étudiées, par rapport au gel de silice Fuji (Fuji Davison RD silica gel) des quantités d'eau adsorbées par les différents adsorbants dont les propriétés ont été fournies. Lorsque la quantité adsorbée par l'adsorbant est proche de celle du gel de silice Fuji, le signe = est utilisé, lorsqu'elle est moins bonne, le signe moins (-) est alors retenu et lorsqu'elle est un peu meilleure le signe + est utilisé et si elle est environ le double, ++ est utilisé et environ 3 fois meilleur, on utilise le symbole +++.

Les absorbants mentionnés dans le Tableau 1 sont connus : ils sont soit disponibles commercialement, ou bien leur synthèse et caractérisation ont été publiées :

Gel de silice : Fuji Davison RD silica gel

Al-CAU-10 : Reinsch et al, Chem. Mater. 2013, 25, 17-26 [10]

MCM-41 : référence 643645 Aldrich Silica, mesostructured

Cr-MIL-101-NH2 : Modrow et al, Dalton Trans., 2012,41, 8690-8696 [12]

Ti-MIL-125 : Dan-Hardi, et al J. Am. Chem. Soc. 2009, 131, 10857. [13]

SAPO-34 : La synthèse est décrite sur le site de l'IZA (International Zeolite Association) avec les références appropriées. http://www.iza-online.org/synthesis/Recipes/SAPO-34.html

Zr-UiO-66-NH2 : La synthèse est décrite dans Kandiah et al J. Mater. Chem., 2010,20, 9848-9851 **[9]**

Zéolithe 13X : 283592 Sigma-Aldrich, Molecular sieves, 13X

L'analyse de ces résultats comparatifs a permis de sélectionner les trinômes (humidité relative)/(Te/Tc)/MOF les plus adaptés pour un fonctionnement optimale dans diverses applications de mise en oeuvre de machines à froid à adsorbant. Les fruits de cette analyse sont répertoriés dans le Tableau 2 (Te=température évaporateur, Tc=température condensateur).

Tableau 2 :

| Type de système | Mode de réalisation | Humidité relative (P/Psat) | $T_e/T_c$ | | Applications ou source de chaleur exploitées | MOF |
|---|---|---|---|---|---|---|
| Fermé | | | Ventilo-convecteurs | Planchers rafraîchissants | | |
| | 1 | 0,1 | 5/45°C | 12/50°C | -Chaudière à gaz naturel<br>- Refrigérateur solaire | Zr-fumarate (MOF 801) AI-CAU-10 |
| | 2 | 0,15 | 5/35°C | 12/45°V | | AI-CAU-10 |
| | 3a | 0,20 | 5/30°C | 12/40°C | Système de climatisation dans véhicules automobiles | Zr-UiO-66-NH2 |
| | 3b | 0,25 | 5/25°C | 12/33°C | Système de climatisation de data centers (exploitation des chaleurs fatales pour la regénération du MOF adsorbant (mode désorption)) | Zr-UiO-66-NH2 Zr-UiO-MTB (MOF 841) Basolite A520 |
| Ouvert | 4 | 0.5≥HR>0,25 | n.a | n.a | Déshumidification (p.ex. roue dessicante) | AI-MIL-100 Zr-fumarate (MOF 801) Zr-UiO-MTB (MOF 841) |

Les propriétés d'adsorption du MOF Zr-UiO-66-NH2 en font un bon candidat pour les applications en climatisation à plancher rafraîchissant (mode de fonctionnement n° 3a et 3b).

De plus, ses propriétés de désorption en fonction de la température démontrent que sa désorption est très efficace entre 60 et 70°C, ce qui en fait un excellent candidat en termes de quantité cyclée. Le résultat est que la quantité cyclée par l'UiO66-NH2 est 3 fois celle du gel de silice.

**Exemple 2 :Synthèse et caractérisation des revêtements (« coatings » en anglais) de MOF**

**Exemple 2a: Feuille Cu /UiO-66**

Une feuille de cuivre (50x50 mm) a été sablée sur les deux faces, traitée (« etched » and anglais) dans une solution d'hydroxyde de sodium (pH>12), désoxydée dans l'acide nitrique dilué (4<pH<6), et on la sèche à l'air à 60°C. On a agité une solution contenant 15,12 g (64,0 mmol) de ZrCl4, 10,8 g (65,2 mmol) d'acide benzène-1,4-dicarboxylique, 11,44 ml de HCl dans 200 ml de diméthylformamide (DMF) jusqu'à ce que la solution soit complètement transparente. La feuille de cuivre est ensuite immergée dans la solution dans un autoclave en acier inoxydable à paroi recouverte de Téflon (« Teflonlined » en anglais). Le mélange est chauffé à 120-160°C (de préférence) pendant 48 heures. Après refroidissement, la feuille de Cu a été soigneusement retirée, rincée trois fois dans du DMF et deux fois dans de l'EtOH et finalement séchée à l'air à 50 °C.

**Exemple 2b: Feuille Cu /UiO-66-NH2**

Une feuille de cuivre (50x50 mm) a été lavée avec de l'éthanol pendant 30 minutes et ensuite cinq fois avec de l'eau sous ultrasons pour nettoyer la surface, et est ensuite placée dans une étuve à 100°C pour l'oxydation.

On a agité une solution contenant 15,12 g (64,0 mmol) de ZrCl4, 11,81 g (65,2 mmol) d'acide 2-amino-benzène-1,4-dicarboxylique, 11,44 ml de HCl dans 200 ml de diméthylformamide (DMF) jusqu'à ce que la solution soit entièrement transparente. La feuille de cuivre est immergée dans la solution dans un autoclave en acier inoxydable à paroi recouverte de Téflon (« Teflonlined » en anglais). Le mélange est chauffé à 120°C pendant 48 heures.

Après refroidissement, la feuille de Cu a été soigneusement retirée, rincée cinq fois dans le DMF et enfin séchée à l'air à 50 °C.

**Exemple 2c: Feuille Al /Zr-fumarate**

Une feuille d'aluminium (50x50 mm) a été traitée dans une solution d'hydroxyde de sodium (pH>12), désoxydée dans de l'acide nitrique dilué (4<pH<6), puis séchée à l'air à 60°C.

On a agité une solution contenant 4,82 g (20,7 mmol) de ZrCl4, 10,29 g (62 mmol) d'acide fumarique dans 200 ml de diméthylformamide (DMF) jusqu'à ce que la solution soit complètement transparente.

La feuille d'aluminium est immergée dans la solution dans un autoclave en acier inoxydable à paroi recouverte de Téflon (« Teflonlined » en anglais). Le mélange est chauffé à 120°C pendant 48 heures.

Après refroidissement, la feuille d'aluminium a été soigneusement retirée, rincée cinq fois dans du DMF et de l'EtOH et finalement séchée à l'air à 50 ° C.

**Exemple 3 : Etude comparative**

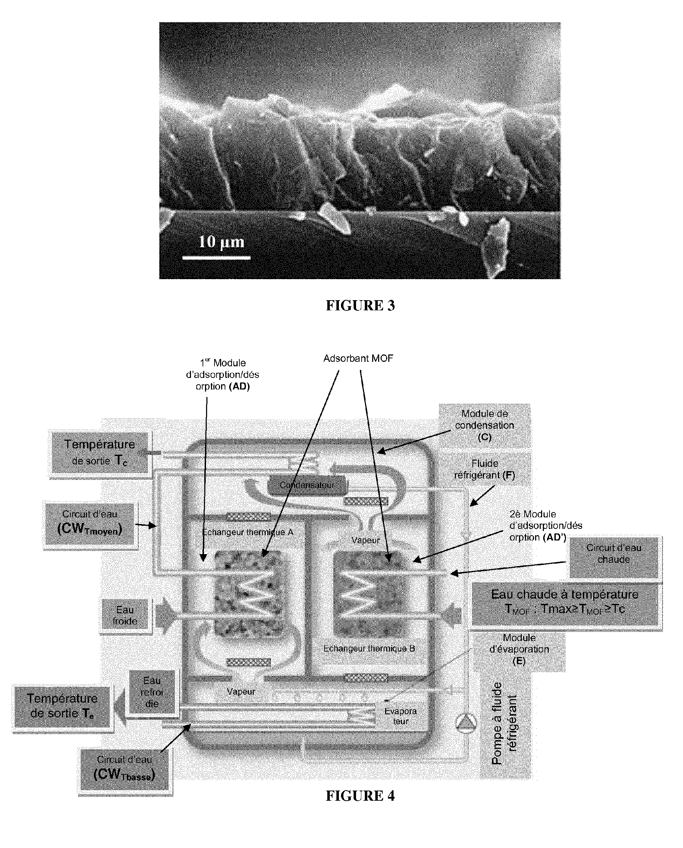

La performance de trois adsorbants sont comparés dans un système fermé tritherme de refroidissement/chauffage à adsorption pour machine à froid, selon la figure 4, comprenant :

a. un fluide réfrigérant (F) constitué d'eau;

b. un module de condensation (C) dudit fluide réfrigérant (F), en connexion thermique avec un circuit d'eau (CW$_{Tmoyen}$) dont la température de l'eau en sortie du circuit est $T_c$ ;

c. un module d'évaporation (E) dudit fluide réfrigérant (F), en connexion thermique avec un circuit d'eau (CW$_{Tbasse}$) dont la température de l'eau en sortie du circuit est $T_e$ ;

d. au moins un module d'adsorption/désorption (AD) contenant un adsorbant solide (A), le module d'adsorption/désorption (AD) étant alternativement en connexion fluide avec ledit module de condensation (C) puis ledit module d'évaporation (E), lequel adsorbant solide (A) peut adsorber ou désorber le fluide réfrigérant (F) selon que le module d'adsorption/désorption (AD) est en connexion fluide avec le module d'évaporation (E) et de condensation (C), respectivement, et selon la température $T_A$ à laquelle l'adsorbant solide (A) est soumis.

Avantageusement, le système contient deux modules d'adsorption/désorption (AD) et (AD'), chacun alternativement en connexion fluide avec les modules de condensation (C) et d'évaporation (E), de sorte que lorsque (AD) est en connexion fluide avec le module de condensation (C) alors (AD') est en connexion fluide avec le module d'évaporation (E), et inversement. Un exemple de configuration d'un tel système est représenté en Figure 4.

Le terme « en connexion thermique », tel qu'utilisé dans le présent document, se réfère à un moyen de connexion permettant l'échange de chaleur entre les éléments auxquels il se réfère. Par exemple, il peut s'agir d'un moyen de connexion permettant l'échange de chaleur entre le module de condensation (C) et le circuit d'eau ($CW_{Tmoyen}$) ou bien entre module d'évaporation (E) et le circuit d'eau ($CW_{Tbasse}$). Par exemple, la connexion thermique peut être réalisée par l'intermédiaire d'un échangeur thermique. Alternativement, la connexion thermique peut être réalisée par passage du circuit d'eau dans le module de condensation (C) ou le module d'évaporation (E), permettant ainsi le transfert de la chaleur dégagée dans le module de condensation (C) dans le circuit d'eau le traversant, ou inversement permettant le transfert de la chaleur adsorbée dans le module d'évaporation (E) dans le circuit d'eau le traversant.

Le terme « en connexion fluide », tel qu'utilisé dans le présent document, se réfère à un moyen de connexion permettant le transfert de vapeur de fluide réfrigérant entre les éléments auxquels il se réfère. Par exemple, il peut s'agir d'un moyen de connexion permettant le transfert de vapeur de fluide réfrigérant d'un module d'adsorption/désorption (AD') vers le module de condensation (C). Il peut également s'agir d'un moyen de connexion permettant le transfert de vapeur de fluide réfrigérant du module d'évaporation vers un module d'adsorption/désorption (AD) comme illustré sur la Figure 4. Avantageusement, cette connexion fluide peut être contrôlée par une valve, qui peut être soit en position fermée (pas de transfert de vapeur de fluide réfrigérant d'un module à un autre), ou en position ouverte. On dira qu'un module est en connexion fluide avec un autre lorsque la valve les connectant est ouverte. Avantageusement, lorsque le système dispose de deux modules (AD) et (AD'), les deux modules d'adsorption/désorption contiennent le même adsorbant solide (A), et ne sont pas en connexion fluide avec le module de condensation (C) ou le module d'évaporation (E) simultanément.

Avantageusement, en mode désorption, l'adsorbant (A) est soumis à une température $T_A$ telle que Tmax ≥ $T_A$ ≥ $T_c$, dans lequel Tc représente la température de l'eau en sortie du circuit d'eau ($CW_{Tmoyen}$), et Tmax représente la fourchette haute de la température à laquelle l'adsorbant solide (A) est régénéré (cad qu'il désorbe les molécules de fluide réfrigérant). Bien entendu, Tmax sera inférieure à la température à laquelle l'adsorbant solide (A) est susceptible de se décomposer ou de se dégrader. La valeur de Tmax dépend de l'adsorbant solide (A) utilisé.

Avantageusement, la connexion thermique entre le fluide réfrigérant (F) et les circuits d'eau ($CW_{Tmoyen}$) et ($CW_{Tbasse}$) des modules de condensation et d'évaporation, respectivement, est assurée par un échangeur thermique (ET).

Les adsorbants suivants sont comparés : gel de silice sur lit fixe, revêtement de SAPO-34 et revêtement de MOF UiO-66-NH2 obtenu selon le procédé de l'invention, avec les paramètres de fonctionnement suivants :

en mode adsorption :

- le module d'adsorption/désorption (AD) est en connexion fluide avec le module d'évaporation (E) ;
- l'adsorbant (A) est soumis à une température $T_A = T_c$ ; dans lequel $T_c$ représente 25°C ou 35°C, pour utilisation du système comme ventilo-convecteur ou surface rafraîchissante, respectivement ;
- $p_e/p_{sat(e)} = 0{,}25$ ; et
- $T_e$ représente 5°C ou 12°C, pour utilisation du système comme ventilo-convecteur ou surface rafraîchissante, respectivement ;
  dans lequel :

  $p_e/p_{sat(e)}$ représente la valeur d'humidité relative dans le module d'évaporation (E) ;
  $p_e$ représente la pression de vapeur d'eau dans le module d'évaporation (E) ; et
  $p_{sat(e)}$ représente la pression de vapeur saturante de l'eau à la température d'adsorption de celle-ci par l'adsorbant solide (A) ;

en mode désorption :

- le module d'adsorption/désorption (AD) est en connexion fluide avec le module de condensation (C) ;

- l'adsorbant (A) est soumis à une température $T_A$ permettant la régénération de l'adsorbant testé (typiquement $T_A$ est telle que $T_{max} \geq T_A > T_c$ ; dans lequel $T_c$ est telle que définie ci-dessus et $T_{max}$ est comprise entre 60-100°C selon l'adsorbant) ;

- $p_c/p_{sat(c)} = 0{,}25$ ; et

- $T_c$ représente 25°C ou 35°C, pour utilisation du système comme ventilo-convecteur ou surface rafraîchissante, respectivement ;
dans lequel :

  $p_c/p_{sat(c)}$ représente la valeur d'humidité relative dans le module de condensation (C);
  $p_c$ représente la pression de vapeur d'eau dans le module de condensation (C); et
  $p_{sat(c)}$ représente la pression de vapeur saturante de l'eau à la température de désorption de celle-ci de l'adsorbant solide (A).

Comme illustré dans le tableau ci-dessous, l'échangeur de chaleur revêtu de MOF UiO-66-NH2 selon le procédé de l'invention a une performance bien supérieure.

|  | Silica gel fixed bed | SAPO-34 coating | UiO-66-NH2 coating (projected) |
|---|---|---|---|
| Masse d'eau cyclée ($\Delta$m/m) [%] | 8% | 6% | 25% |
| COP | 0,6 | n.a. | 0,72 |
| Specific cooling power (SCP) [W/kg] | 50 | 500 | 500 |

## LISTE DE REFERENCES

1. J. Bauer et al. Int. J. Energy Res. 2009; 33:1233-1249
2. EP2230288
3. D. Wiersum, Asian J. 2011, 6, 3270-3280.
4. Schoenecker, Ind. Eng. Chem. Res., 2012, 51, 6513.
5. Cmarik, Langmuir, 2012, 28, 15606.
6. Furukawa, J. Am. Chem. Soc., 2014, 136, 4369-4381.
7. Cavka et al., J. Am. Chem. Soc., 2008, 130, 13850
8. Wiβmann et al., Microporous mesoporous mater., 2012, 152, 64
9. Kandiah et al J. Mater. Chem., 2010,20, 9848-9851
10. Reinsch et al, Chem. Mater. 2013, 25, 17-26
11. Volkringer,†Chem. Mater. 2009, 21, 5695-5697
12. Modrow et al, Dalton Trans., 2012,41, 8690-8696
13. Dan-Hardi, et al J. Am. Chem. Soc. 2009, 131, 10857
14. K. Byrapsa, et al. « Handbook of hydrothermal technology », Noyes Publications, Parkridge, New Jersey USA, William Andrew Publishing, LLC, Norwich NY USA, 2001
15. G. Tompsett, et al. ChemPhysChem. 2006, 7, 296
16. S.-E. Park, et al. Catal. Survey Asia 2004, 8, 91
17. C. S. Cundy, Collect. Czech. Chem. Commum. 1998, 63, 1699
18. S. H. Jhung, et al. Bull. Kor. Chem. Soc. 2005, 26, 880

## Revendications

1. Procédé de croissance de MOF sur la surface d'un support métallique, comprenant :

    (i) oxyder le métal de la surface du support métallique pour la recouvrir d'une couche d'oxyde métallique;

(ii) préparer une solution/suspension précurseur de matériau MOF comprenant le mélange dans un solvant polaire (a) d'un précurseur inorganique métallique se présentant sous la forme de métal M, d'un sel de métal M ou d'un complexe de coordination comprenant l'ion métallique M dans lequel M est un ion métallique choisi parmi $Al^{3+}$, $Fe^{2+}$, $Fe^{3+}$, $Zn^{2+}$, $Ti^{3+}$, $Ti^{4+}$, $Zr^{2+}$, $Zr^{4+}$, $Ca^{2+}$, $Cu^{2+}$, $Gd^{3+}$, $Mg^{2+}$, $Mn^{2+}$, $Mn^{3+}$, $Mn^{4+}$ ou $Si^{4+}$; de préférence $Zr^{4+}$ ou $Al^{3+}$; et (b) d'au moins un ligand L choisi parmi un ligand di-, tri- ou tétra- carboxylate choisi parmi : $C_2H_2(CO_2^-)_2$ (fumarate), $C_2H_4(CO_2^-)_2$ (succinate), $C_3H_6(CO_2^-)_2$ (glutarate), $C_4H_4(CO_2^-)_2$ (muconate), $C_4H_8(CO_2^-)_2$ (adipate), $C_7H_{14}(CO_2^-)_2$ (azelate), $C_5H_3S(CO_2^-)_2$ (2,5-thiophènedicarboxylate), $C_6H_4(CO_2^-)_2$ (téréphtalate), $C_6H_4(CO_2^-)_2$ (isotéréphtalate), $C_6H_2N_2(CO_2^-)_2$ (2,5-pyrazine dicarboxylate), $C_{10}H_6(CO_2^-)_2$ (naphtalène-2,6-dicarboxylate), $C_{12}H_8(CO_2^-)_2$ (biphényle-4,4'-dicarboxylate), $C_{12}H_8N_2(CO_2^-)_2$ (azobenzènedicarboxylate), $C_6H_3(CO_2^-)_3$ (benzène-1,2,4-tricarboxylate), $C_6H_3(CO_2^-)_3$ (benzène-1,3,5-tricarboxylate), $C_{24}H_{15}(CO_2^-)_3$ (benzène-1,3,5-tribenzoate), $C_6H_2(CO_2^-)_4$ (benzène-1,2,4,5-tétracarboxylate, $C_{10}H_4(CO_2^-)_4$ (naphtalène-2,3,6,7-tétracarboxylate), $C_{10}H_4(CO_2^-)_4$ (naphtalène-1,4,5,8-tétracarboxylate), $C_{12}H_6(CO_2^-)_4$ (biphényl-3,5,3',5'-tétracarboxylate), le 2-aminotéréphtalate, le 2-nitrotéréphtalate, le 2-méthyltéréphtalate, le 2-chlorotéréphtalate, le 2-bromotéréphtalate, le 2,5-dihydroxotéréphtalate, le tétrafluorotéréphtalate, le tétraméthyltéréphtalate, le diméthyl-4,4'-biphénydicarboxylate, le tétraméthyl-4,4'-biphénydicarboxylate, le dicarboxy-4,4'-biphénydicarboxylate, le 2,5-pyrazyne dicarboxylate, le MTB (méthanetétrabenzoate), ou le 1,4-benzenedicarboxylate ;

(iii) immerger le support métallique oxydé obtenu à l'étape (i) dans la solution/suspension obtenue à l'étape (ii);

(iv) chauffer le mélange de l'étape (iii) à 100-140°C, de préférence 110-130°C, avantageusement à 120°C pendant 24 à 36 heures, de préférence 48 à 36 heures, avantageusement au moins 48 heures ;

(v) Retirer le support métallique de la solution/suspension précurseur de matériau MOF ;

(vi) Rincer le support avec un solvant approprié ; et

(vii) Sécher à l'air à 40-60°C, de préférence 45-55°C, avantageusement à 50°C.

2. Procédé selon la revendication 1, dans lequel le ligand L représente $C_2H_2(CO_2^-)_2$ (fumarate), $C_6H_4(CO_2^-)_2$ (téréphtalate), $C_6H_4(CO_2^-)_2$ (isotéréphtalate), le 2-aminotéréphtalate, le MTB (méthanetétrabenzoate), ou le 1,4-benzènedicarboxylate.

3. Procédé selon la revendication 1 ou 2, dans lequel le MOF couvrant le support métallique est choisi parmi Zr-UiO-66, Zr-UiO-66-NH2, Zr-UiO-fumarate (MOF-801), Zr-UiO-MTB (MOF-841), Al-CAU-10 ou Basolite A520.

4. Procédé selon l'une quelconque des revendications 1 à 3, dans lequel le support métallique est une feuille de cuivre ou d'aluminium.

5. Procédé selon l'une quelconque des revendications 1 à 4, dans lequel le solvant utilisé à l'étape (ii) est choisi parmi l'eau, les alcools, le diméthylformamide, le diméthylsulfoxide, l'acétonitrile, le tétrahydrofurane, le diéthylformamide, le chloroforme, le dichlorométhane, le diméthylacétamide ou un mélange d'au moins deux de ces solvants.

6. Procédé selon l'une quelconque des revendications 1 à 5, dans lequel au moins un additif est ajouté au cours de la préparation de la solution/suspension précurseur de matériau MOF, dans l'étape (ii), afin de moduler le pH du mélange.

7. Procédé selon la revendication 6, dans lequel ledit au moins un additif est choisi parmi HF, HCl, $HNO_3$, $H_2SO_4$, NaOH, KOH, la lutidine, l'éthylamine, la méthylamine, l'ammoniac, l'urée, l'EDTA, la tripropylamine, ou la pyridine ; de préférence HCl.

8. Support métallique revêtu de MOF susceptible d'être obtenu par un procédé selon l'une quelconque des revendications 1 à 7.

9. Utilisation du procédé selon l'une quelconque des revendications 1 à 7, pour la fabrication d'échangeurs de chaleurs, notamment pour des systèmes de climatisation.

$$Q_c = Q_0 + Q_g$$

2,5 kW

$Q_g$

1,5 kW

Compression
thermique

1 kWf

$$Q_0 = 0,65 \times Q_a$$

**FIGURE 1**

100 μm

**FIGURE 2**

EP 2 998 378 A1

**FIGURE 3**

**FIGURE 4**

14

Europäisches
Patentamt

European
Patent Office

Office européen
des brevets

RAPPORT DE RECHERCHE EUROPEENNE

Numéro de la demande

EP 15 18 5195

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | DE 10 2011 106668 A1 (FRAUNHOFER GES FORSCHUNG [DE]) 10 janvier 2013 (2013-01-10) * alinéas [0001], [0017], [0018], [0022], [0037]; revendications 1-3,5,6,10-11,13,23; exemple * ----- | 1-9 | INV. C09K5/04 C23C18/12 |
| X | HAILING GUO ET AL: ""Twin Copper Source" Growth of Metal-Organic Framework Membrane: Cu 3 (BTC) 2 with High Permeability and Selectivity for Recycling H 2", JOURNAL OF THE AMERICAN CHEMICAL SOCIETY, vol. 131, no. 5, 11 février 2009 (2009-02-11), pages 1646-1647, XP055241221, US ISSN: 0002-7863, DOI: 10.1021/ja8074874 | 1,2,4-8 | |
| Y | * page 1646, colonne de gauche, ligne 32 - colonne de droite, ligne 4 * ----- | 9 | |
| X | US 2009/169857 A1 (FISCHER RICHARD [DE] ET AL) 2 juillet 2009 (2009-07-02) * alinéas [0001], [0011] - [0018], [0027] - [0029], [0032] - [0044] * ----- | 1-8 | |
| X | US 2012/141685 A1 (GAAB MANUELA [DE] ET AL) 7 juin 2012 (2012-06-07) * alinéas [0003], [0026], [0037], [0046], [0058], [0067], [0077]; exemples * ----- -/-- | 1-8 | |
| Y | | 9 | |

DOMAINES TECHNIQUES RECHERCHES (IPC)

C09K
C23C
F28B
B01J

Le présent rapport a été établi pour toutes les revendications

| Lieu de la recherche | Date d'achèvement de la recherche | Examinateur |
|---|---|---|
| La Haye | 14 janvier 2016 | Martinez Marcos, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................
& : membre de la même famille, document correspondant

EPO FORM 1503 03.82 (P04C02)

Europäisches
Patentamt

European
Patent Office

Office européen
des brevets

**RAPPORT DE RECHERCHE EUROPEENNE**

Numéro de la demande

EP 15 18 5195

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| Y | FELIX JEREMIAS ET AL: "Water and methanol adsorption on MOFs for cycling heat transformation processes", NEW JOURNAL OF CHEMISTRY, vol. 38, no. 5, 1 janvier 2014 (2014-01-01), page 1846, XP055239676, GB ISSN: 1144-0546, DOI: 10.1039/c3nj01556d * page 1847, colonne de gauche, ligne 14 - colonne de droite, ligne 20 * * page 1848, colonne de droite, ligne 6 - page 1849, colonne de droite, ligne 15; figures 1-4 * ----- | 9 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| La Haye | 14 janvier 2016 | Martinez Marcos, V |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 15 18 5195

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-01-2016

| Document brevet cité au rapport de recherche | Date de publication | Membre(s) de la famille de brevet(s) | Date de publication |
|---|---|---|---|
| DE 102011106668 A1 | 10-01-2013 | DE 102011106668 A1<br>EP 2729246 A1<br>WO 2013004726 A1 | 10-01-2013<br>14-05-2014<br>10-01-2013 |
| US 2009169857 A1 | 02-07-2009 | AR 057693 A1<br>DE 102005035762 A1<br>EP 1910586 A1<br>US 2009169857 A1<br>WO 2007014678 A1<br>ZA 200800837 A | 12-12-2007<br>01-02-2007<br>16-04-2008<br>02-07-2009<br>08-02-2007<br>26-08-2009 |
| US 2012141685 A1 | 07-06-2012 | AUCUN | |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2230288 A

**Littérature non-brevet citée dans la description**

- **J. BAUER.** *Int. J. Energy Res,* 2009, vol. 33, 1233-1249
- **K. BYRAPSA et al.** Handbook of hydrothermal technology. Noyes Publications, 2001
- **G. TOMPSETT et al.** *ChemPhysChem.,* 2006, vol. 7, 296
- **S.-E. PARK et al.** *Catal. Survey Asia,* 2004, vol. 8, 91
- **C. S. CUNDY.** *Collect. Czech. Chem. Commum.,* 1998, vol. 63, 1699
- **S. H. JHUNG et al.** *Bull. Kor. Chem. Soc.,* 2005, vol. 26, 880
- **CAVKA et al.** *J. Am. Chem. Soc.,* 2008, vol. 130, 13850
- **KANDIAH et al.** *J. Mater. Chem.,* 2010, vol. 20, 9848-9851
- **WIBMANN et al.** *Microporous mesoporous mater.,* 2012, vol. 152, 64
- **REINSCH et al.** *Chem. Mater.,* 2013, vol. 25, 17-26
- **VOLKRINGER.** *†Chem. Mater.,* 2009, vol. 21, 5695-5697
- **MODROW et al.** *Dalton Trans.,* 2012, vol. 41, 8690-8696
- **DAN-HARDI et al.** *J. Am. Chem. Soc.,* 2009, vol. 131, 10857
- **J. BAUER et al.** *Int. J. Energy Res.,* 2009, vol. 33, 1233-1249
- **D. WIERSUM.** *Asian J.,* 2011, vol. 6, 3270-3280
- **SCHOENECKER.** *Ind. Eng. Chem. Res.,* 2012, vol. 51, 6513
- **CMARIK.** *Langmuir,* 2012, vol. 28, 15606
- **FURUKAWA.** *J. Am. Chem. Soc.,* 2014, vol. 136, 4369-4381
- **WIβMANN et al.** *Microporous mesoporous mater.,* 2012, vol. 152, 64